# DEMANDE DE BREVET EUROPEEN

(11) **EP 2 556 973 A1**
(43) Date de publication de la demande: **13.02.2013**
(21) Numéro de dépôt: 12178550.5
(22) Date de dépôt: 30.07.2012
(51) Int. Cl.: B60D 1/02, B60D 1/173, B62D 63/06, B60D 1/07, B60D 1/24

(54) **Ensemble routier avec système de guidage axial agissant en avant de l'essieu arrière du véhicule tracteur**

(30) Priorité: 09.08.2011 FR 1157256
(71) Demandeur: LG Développement, 56150 Baud (FR)
(72) Inventeur: Le Goff, Jean Philippe, 56150 Baud (FR)
(74) Mandataire: Hays, Bertrand

(57) **Abrégé**

La présente invention concerne un ensemble routier comprenant, un véhicule tracteur, une remorque 2 avec au moins un timon coulissant 5 à freinage par inertie, un système d'attelage 3, 4, et un système de guidage axial pour maintenir l'axe longitudinal médian de la remorque sensiblement dans le plan longitudinal vertical du véhicule. Le système de guidage axial comprend deux premiers dispositifs de liaison 6 montés symétriquement sur le châssis du véhicule, de part et d'autre de son plan longitudinal vertical, sensiblement sur l'axe de tangage, et deux seconds dispositifs de liaison 7 montés symétriquement sur le châssis de la remorque, en partie avant du châssis, et un dispositif de couplage 8, agissant sur les premiers ou seconds dispositifs de liaison pour assurer l'identité des déplacements longitudinaux relatifs des deux seconds dispositifs de liaison et/ou de parties mobiles des premiers ou seconds dispositif de liaison.

## Description

La présente invention concerne un ensemble routier comprenant un véhicule tracteur et une remorque à timon coulissant, ainsi qu'un système de guidage axial particulier entre le véhicule tracteur et la remorque agissant dans le sens longitudinal et en avant de l'essieu arrière du véhicule tracteur.

Il est connu, notamment dans le document brevet EP 2 151 373 un ensemble routier comprenant un véhicule tracteur, une remorque comprenant un timon coulissant à freinage par inertie, un système d'attelage comprenant au moins un dispositif d'accrochage monté sur le châssis du véhicule tracteur en avant de l'essieu arrière, apte à coopérer avec un dispositif d'accrochage complémentaire de la remorque monté à l'extrémité libre avant de la partie mobile du timon coulissant de la remorque, pour accrocher la remorque au véhicule tracteur dans une position dite accrochée de la remorque, et un système de guidage axial pour maintenir l'axe longitudinal médian de la remorque sensiblement dans le plan longitudinal vertical du véhicule tracteur dans la position accrochée de la remorque.

Le système de guidage axial supprime tout mouvement latéral relatif de la remorque par rapport à son véhicule tracteur. Il laisse libre les mouvements relatifs de tangage de la remorque par rapport à son véhicule tracteur, et les mouvements longitudinaux du freinage, et peut laisser libre ou non les mouvements relatifs de roulis de la remorque par rapport à son véhicule tracteur.

Cette nouvelle génération de remorques routières, dites à guidage axial apparue récemment sur le marché offre de nombreux avantages aux utilisateurs tels que compacité, maniabilité, tenue de route, et charge utile supérieure pour un encombrement équivalent à un véhicule classique.

La principale difficulté pour la réalisation de ce type de remorque est la réalisation et l'implantation du système de guidage axial. Dans les ensembles routiers proposés à ce jour, notamment dans le document brevet cité ci-dessus ainsi que dans les documents brevets EP 2 289 773 et EP 2 289 774, le système de guidage axial est toujours placé entre l'essieu arrière du véhicule tracteur et l'essieu avant de la remorque. Il comprend deux parties, l'une fixée sur le châssis du véhicule et l'autre complémentaire sur le châssis de la remorque, les deux parties agissant toujours par appui mécanique l'une contre l'autre dans le sens transversal du véhicule pour réaliser la fonction de guidage.

La grande diversité des formes des parties arrière des véhicules existant sur le marché rend impossible l'implantation d'un dispositif de guidage standard. Le strict respect des réglementations administratives et des contraintes techniques auxquelles doivent se soumettre aujourd'hui les véhicules routiers ne permet pas la modification notable de ceux-ci. L'addition de ces facteurs rend difficile l'industrialisation du guidage axial des véhicules, la seule solution existant à ce jour étant la réalisation d'ensembles ou kits adaptés à chaque modèle de véhicule.

Par ailleurs, l'accrochage de la remorque au véhicule tracteur reste délicat car cette opération demande une manoeuvre du véhicule en marche arrière qui nécessite le parfait alignement simultané du dispositif d'accrochage de la remorque avec celui du véhicule d'une part, ainsi que des dispositifs complémentaires du système de guidage d'autre part, ces dispositifs d'accrochage et dispositifs de guidage axial étant placés à une distance longitudinale de l'ordre de deux mètres les uns des autres.

Le but de la présente invention est de proposer un ensemble routier avec un système de guidage axial palliant au moins l'un des inconvénients précités, qui soit notamment simple de conception et de mise en oeuvre pour une fabrication en série.

A cet effet, la présente invention a pour objet un ensemble routier comprenant
- un véhicule tracteur comprenant un châssis sur lequel sont montés au moins un essieu avant portant des roues avant et un essieu arrière portant des roues arrière,
- une remorque comprenant un châssis sur lequel sont montés au moins deux roues, et au moins un timon coulissant à freinage par inertie monté sur le châssis dans une position de symétrie par rapport au plan longitudinal vertical de la remorque, ledit timon coulissant comportant une partie fixe montée de manière fixe à l'avant du châssis et une partie mobile montée dans la partie fixe de manière coulissante,
- un système d'attelage comprenant au moins un dispositif d'accrochage monté sur le châssis du véhicule tracteur dans une position de symétrie par rapport au plan longitudinal vertical du véhicule, en avant de l'essieu arrière, apte à coopérer avec un dispositif d'accrochage complémentaire de la remorque monté à l'extrémité libre avant de la partie mobile d'au moins un timon coulissant de la remorque, pour accrocher la remorque au véhicule tracteur dans une position dite accrochée de la remorque, de sorte que la remorque soit articulée sur le véhicule tracteur au moins autour d'un axe transversal de tangage sensiblement horizontal situé en avant de l'essieu arrière du véhicule tracteur, et,
- un système de guidage axial pour maintenir l'axe longitudinal médian de la remorque sensiblement dans le plan longitudinal vertical du véhicule tracteur dans la position accrochée de la remorque,
   **caractérisé en ce que** ledit système de guidage axial comprend
- deux premiers dispositifs de liaison montés symétriquement sur le châssis du véhicule tracteur, de part et d'autre et à distance de son plan longitudinal vertical de symétrie, en avant de son essieu arrière, sensiblement sur l'axe de tangage de la remorque, et deux seconds dispositifs de liaison, montés symétriquement et en correspondance avec les premiers sur le châssis de la remorque, en partie avant du châssis, de part et d'autre de son plan longitudinal vertical de symétrie, chaque premier dispositif de liaison étant apte à s'accoupler avec un second dispositif de liaison dans la position accrochée de la remorque, en autorisant un pivotement du second dispositif de liaison autour de l'axe de tangage et un déplacement longitudinal relatif, sensiblement parallèle aux plans longitudinaux verticaux de symétrie de la remorque et du véhicule tracteur, du second dispositif de liaison par rapport au premier dispositif de liaison et/ou d'une partie mobile du premier ou du second dispositif de liaison par rapport à une partie fixe dudit premier ou second dispositif de liaison, et
- un dispositif de couplage ou de synchronisation, agissant sur les premiers dispositifs de liaison et/ou les seconds dispositifs de liaison, pour assurer l'identité des déplacements longitudinaux relatifs des deux seconds dispositifs de liaison par rapport aux deux premiers dispositifs de liaison et/ou desdites parties mobiles par rapport auxdites parties fixes.

Le système de guidage axial selon l'invention possède trois caractéristiques principales. Il est tout d'abord placé en avant de l'essieu arrière du véhicule tracteur, au niveau du système d'attelage; d'autre part et contrairement à l'ensemble des systèmes de guidage existants à ce jour, il n'exerce, pour réaliser le guidage axial de la remorque, aucune action par appui mécanique quelconque dans le sens transversal ni sur le véhicule ni sur la remorque; enfin, un dispositif de couplage synchronise en permanence, dans le sens longitudinal, les mouvements relatifs des côtés de la remorque par rapport à ceux de son véhicule tracteur sans que cette liaison selon l'invention ne perturbe le bon fonctionnement du timon coulissant qui assure le freinage ou ne modifie les mouvements de tangage de la remorque. Il comprend des premiers dispositifs de liaison du véhicule tracteur au niveau de l'axe de tangage coopérant avec des seconds dispositifs de liaison complémentaires en partie avant de la remorque, ces premiers et/ou seconds dispositifs de liaison sont reliés par un dispositif de couplage ou de synchronisation qui contraint
- les deux seconds dispositifs de liaison à se déplacer longitudinalement de façon parfaitement identique et simultanée vers l'avant et vers l'arrière par rapport aux deux premiers dispositifs de liaison, ou inversement les deux premiers dispositifs de liaison à se déplacer longitudinalement de façon parfaitement identique et simultanée vers l'avant et vers l'arrière par rapport aux deux seconds dispositifs de liaison, ou
- des parties mobiles des deux premiers dispositifs de liaison ou des deux seconds dispositifs de liaison à se déplacer longitudinalement de façon parfaitement identique et simultanée vers l'avant et vers l'arrière par rapport aux parties fixes desdits premiers ou seconds dispositifs de liaison.

En l'absence de ce dispositif de couplage, les dispositifs de liaison ne pourraient à eux seuls empêcher un débattement latéral de la remorque de part et d'autre du plan de symétrie du véhicule tracteur.

Le système de guidage axial agit dans le sens longitudinal, les premiers dispositifs de liaison et seconds dispositifs de liaison agissant par appui mécanique les uns contre les autres dans le sens longitudinal du véhicule et de la remorque, et le dispositif de couplage synchronisant les mouvements relatifs longitudinaux des deux seconds dispositifs de liaison par rapport aux deux premiers dispositifs de liaison et/ou des parties mobiles par rapport auxdites parties fixes, et garantissant ainsi un pivotement relatif des premiers dispositifs de liaison par rapport aux seconds dispositif de liaison uniquement autour de l'axe de tangage et éventuellement autour de l'axe longitudinal médian de la remorque.

L'action combinée du système d'attelage et du système de guidage axial, comprenant les premiers et seconds dispositifs de liaison pilotés par le dispositif de couplage, assure :
- la traction de la remorque par le véhicule ;
- le freinage de la remorque de type à inertie assuré par le libre mouvement longitudinal du (ou des) timon(s) coulissant(s) ;
- le maintien des axes longitudinaux médians du véhicule et de la remorque sensiblement dans le même plan vertical ;
- le libre tangage de la remorque par rapport au véhicule autour de son ou ses points d'accrochage ;
- et éventuellement la suppression du mouvement de roulis de la remorque par rapport au véhicule, ce qui améliore la tenue de route de l'ensemble routier.

Les avantages de ce nouveau système de guidage axial sont multiples. L'accrochage et le guidage axial de la remorque étant réalisés tous deux à l'avant de la remorque, aucun autre dispositif complémentaire de guidage n'est donc nécessaire à l'extrémité arrière du véhicule tracteur ce qui libère le système de guidage de toutes les contraintes liées aux différences dimensionnelles entre les différents véhicules existants sur le marché. L'arrière du véhicule tracteur n'étant pas modifié, il conserve la partie centrale de ses équipements routiers d'origine dont certains obligatoires tels que feux d'éclairage, barre anti-encastrement, pare-choc, plaque minéralogique ainsi que boule d'attelage ou crochet de remorquage.

L'accrochage du véhicule à la remorque est facilité car le système d'attelage et le système de guidage axial ont sensiblement la même position longitudinale sur le châssis du véhicule ce qui facilite l'accouplement, contrairement aux systèmes de l'art qui sont fixés sur le véhicule à deux positions longitudinales relativement éloignées.

Une remorque à guidage axial selon l'invention peut s'atteler indifféremment à plusieurs types ou modèles de véhicules tracteurs différents simplement équipés d'un ensemble ou kit d'attelage et guidage compact comprenant ledit ou lesdits dispositifs d'accrochage et lesdits premiers dispositif de liaison, ledit dispositif de couplage étant inclus dans ce dernier ensemble ou inclus avec la remorque. Le coût de réalisation de ce système de guidage axial selon l'invention s'avère par ailleurs moins onéreux que ceux existants à ce jour et sa fixation sur le véhicule, par boulonnage sur les points d'ancrage du châssis, est simple et ne nécessite pas de réglage. La compatibilité de l'accrochage de la remorque à tout type de véhicule tracteur est facile à assurer grâce à un seul modèle d'attelage standardisé à entraxe et hauteur fixe.

Le dispositif de couplage peut être de type mécanique, hydraulique, pneumatique et/ou électrique.

Selon un mode de réalisation, des premiers éléments parmi les premiers dispositifs de liaison et les seconds dispositifs de liaison comprennent chacun une partie mobile montée coulissante dans une partie fixe, les parties mobiles comprenant une extrémité libre coopérant avec les seconds éléments, le dispositif de couplage agissant sur les parties mobiles pour assurer l'identité de leur coulissement par rapport aux parties fixes.

De préférence, les deux seconds dispositifs de liaison comprennent chacun une partie mobile montée coulissante et sensiblement parallèle au plan longitudinal vertical de symétrie de la remorque, dans une partie fixe solidaire du châssis de la remorque.

Selon un mode de réalisation, la remorque comprend deux timons coulissants à freinage par inertie, disposés symétriquement de part et d'autre du plan longitudinal vertical de la remorque, dont les extrémités libres des parties mobiles sont équipées de dispositifs d'accrochage complémentaires aptes à coopérer avec deux dispositifs d'accrochage montés sur le châssis du véhicule tracteur symétriquement de part et d'autre du plan longitudinal vertical du véhicule tracteur, lesdits dispositifs d'accrochage constituant lesdits premiers dispositifs de liaison et les deux timons coulissants munis des dispositifs d'accrochage complémentaires constituant les seconds dispositifs de liaison, le dispositif de couplage agissant sur les parties mobiles des timons coulissants, de préférence sur des portions arrière des parties mobiles des timons coulissants qui s'étendent derrière leurs parties. Dans ce mode de réalisation, le système de guidage axial supprime sensiblement tout mouvement de roulis, et permet de maintenir le plan longitudinal vertical de la remorque sensiblement dans le plan longitudinal vertical du véhicule tracteur dans la position accrochée de la remorque. Selon un mode de réalisation, la remorque comprend en outre un troisième timon coulissant disposé selon le plan longitudinal de la remorque, le véhicule tracteur comprenant alors trois dispositifs d'accrochage.

Selon un mode de réalisation, chaque partie mobile est solidaire d'un piston qui coulisse dans un cylindre, en définissant de part et d'autre du piston une chambre avant et une chambre arrière, le dispositif de couplage de type hydraulique ou pneumatique, comprenant une connexion fluidique de la chambre avant d'un cylindre avec la chambre arrière de l'autre cylindre fixé symétriquement de l'autre côté du plan vertical médian. Le volume de fluide s'échappant de la chambre arrière d'un des vérins engendre un déplacement de son piston identique à celui de l'autre vérin ayant la même section intérieure et dont la chambre avant reçoit le même volume de fluide déplacé.

Dans le cas de deux timons coulissants, le dispositif de couplage comprend deux vérins montés fixes par leur cylindre sur le châssis de la remorque et dont les tiges de piston sont fixées aux portions arrière des parties mobiles des timons coulissants, des moyens élastiques tels qu'un ressort sont montés dans la chambre arrière de chaque vérin pour solliciter élastiquement les parties mobiles des timons en position déployée.

Selon un autre mode de réalisation, le dispositif de couplage assure un couplage mécanique des parties mobiles des timons coulissants assurant ainsi l'identité de leurs déplacements longitudinaux. Le dispositif de couplage comprend une barre sous forme de crémaillère fixée à chaque portion arrière d'une partie mobile d'un timon coulissant et disposée parallèlement à son axe de coulissement, et un arbre de couplage ou de synchronisation monté rotatif sur le châssis de la remorque et sensiblement perpendiculaire au plan longitudinal vertical de la remorque, et portant en extrémité des pignons engrenant avec lesdites barres crémaillères. Dans une variante de réalisation du couplage mécanique, le dispositif de couplage comprend au moins un câble de liaison, monté en boucles croisées autour de poulies solidaires du châssis de la remorque, et fixé aux portions arrière des parties mobiles des timons coulissants.

Selon un mode de réalisation, dans le cas de deux timons coulissants, les dispositifs d'accrochage du véhicule tracteur sont équipés de moyens de synchronisation aptes à ne permettre que le verrouillage uniquement simultané des deux dispositifs d'accrochage complémentaires de la remorque dans les dispositifs d'accrochage du véhicule, ces moyens de synchronisation des verrouillages peuvent être de type mécanique, hydraulique, pneumatique et/ou électrique.

Selon un mode de réalisation, la remorque comprend un seul timon coulissant disposé selon l'axe longitudinal de la remorque, chaque premier ou second dispositif de guidage comprend un vérin, dont le corps est monté fixe sur le châssis du véhicule ou le châssis de la remorque et dont sa tige de piston est munie en extrémité d'une tête de guidage apte à s'accoupler avec un second dispositif de liaison de la remorque ou un premier dispositif de liaison du véhicule tracteur, le dispositif de couplage comprenant deux lignes, sous forme de canalisations rigides ou tuyaux souples, reliant les chambres des vérins de façon croisée, les lignes comprenant de préférence des clapets anti-retour et des distributeurs tout ou rien commandés en ouverture lorsqu'un effort est appliqué sur les têtes de guidage. Les têtes de guidage peuvent comprendre par exemple un patin d'appui à surface active plane monté à l'extrémité avant de la tige de vérin via une liaison de type rotule, les patins venant en appui contre des surfaces planes, des premiers ou des seconds dispositifs de liaison, disposées sensiblement perpendiculairement aux axes longitudinaux du véhicule ou de la remorque. Dans ce cas, le système de guidage axial autorise un mouvement de roulis de la remorque autour de son axe longitudinal médian. En variante, les têtes de guidage peuvent être démunies de patin et comprendre seulement des rotules qui viennent se positionner dans des logements semi-sphériques des premiers ou des seconds dispositifs de liaison. Les deux rotules étant emprisonnées dans leurs demi-sphères lorsque la remorque est en position accrochée, les vérins, fixés au châssis de la remorque, ne peuvent plus se déplacer verticalement par rapport au véhicule ce qui empêche tout mouvement de roulis de la remorque ce qui a pour effet d'améliorer sensiblement la tenue de route de l'ensemble routier.

Les distributeurs sont pilotés par des systèmes de commande intégrés aux têtes de guidage montées coulissantes sur les tiges de vérin. En variante, les distributeurs sont disposés à l'intérieur du corps du vérin dont la tige est alors munie d'une capacité de déplacement limitée par rapport à son piston mais suffisante pour actionner un distributeur interne à la tige qui débouche en partie arrière du vérin et par laquelle s'évacue le fluide vers la chambre avant de l'autre vérin. Dans le cas où les vérins sont solidaires du véhicule, l'extrémité du corps, opposée à la tige qui porte la tête de guidage, est montée sur le châssis via un palier oscillant dont l'axe est sensiblement confondu avec l'axe transversal de tangage de la remorque.

Selon un mode de réalisation, la remorque comprend un seul timon coulissant disposé selon l'axe longitudinal de la remorque, chaque premier ou second dispositif de guidage comprend un bras longitudinal, sous forme de crémaillère, s'étendant sensiblement parallèlement à l'axe longitudinal du véhicule ou de la remorque, chaque second ou chaque premier dispositif de liaison complémentaire comprenant un pignon intermédiaire monté rotatif sur le châssis de la remorque ou du véhicule tracteur, autour d'un axe perpendiculaire à l'axe longitudinal de la remorque ou du véhicule tracteur, chaque pignon intermédiaire étant apte à s'engrener avec un bras longitudinal en forme de crémaillère dans la position accrochée de la remorque, le dispositif de couplage comprenant un arbre de couplage ou de synchronisation, monté rotatif sur le châssis de la remorque ou du véhicule et sensiblement perpendiculaire à leur plan longitudinal vertical, et portant en extrémité des pignons de couplage engrenant avec les pignons intermédiaires. De préférence, des moyens de synchronisation sont en outre prévus pour synchroniser l'engagement des bras crémaillères avec les pignons intermédiaires. Le pignon latéral entraîné en rotation par le déplacement de sa crémaillère impose à l'autre pignon qui lui est symétrique la même rotation grâce à l'arbre de couplage qui leur est solidaire, ce qui assure le déplacement identique, dit synchronisation, de l'autre crémaillère au jeu fonctionnel près.

L'invention sera mieux comprise, et d'autres buts, détails, caractéristiques et avantages apparaîtront plus clairement au cours de la description explicative détaillée qui va suivre de modes de réalisation particuliers actuellement préférés de l'invention, en référence aux dessins schématiques annexés, sur lesquels :
- la figure 1A est une vue en perspective d'un ensemble routier selon un premier mode de réalisation l'invention, comprenant un véhicule tracteur et une remorque en position non- accrochée ;
- la figure 1B est une vue de dessus de l'ensemble routier de la figure 1 ;
- la figure 2 est une vue analogue de celle de la figure 1, la remorque étant en position accrochée ;
- la figure 3 est une vue partielle agrandie en perspective du système d'accrochage et du système de guidage axial de l'ensemble routier de la figure 2 ;
- les figures 4A, 4B et 4C sont des vues partielles de côté de la figure 3 lors de l'engagement d'un second dispositif de liaison avec un premier dispositif de liaison du système de guidage axial ;
- la figure 5 est une vue en perspective d'un ensemble de routier selon une variante du premier mode de réalisation ;
- la figure 6 est une vue en perspective du système d'accrochage et du système de guidage axial d'un ensemble routier selon un deuxième mode de réalisation ;
- la figure 7 est une vue de dessus des systèmes de la figure 6 ;
- la figure 8 est une vue selon le plan de coupe VIII-VIII de la figure 7 ;
- la figure 9 est un schéma de principe illustrant le dispositif de couplage hydraulique du système de guidage axial des figures 6 et 7 ;
- la figure 10 est une vue analogue de celle de la figure 8 illustrant une variante de réalisation du second mode de réalisation ;
- la figure 11 est une vue en perspective d'un ensemble routier selon une troisième mode de réalisation, la remorque étant en position non accrochée ;
- la figure 12 est une vue en perspective du système d'accrochage et du système de guidage de l'ensemble routier de la figure 11, la remorque étant en position accrochée ;
- la figure 13 est une vue selon le plan de coupe XIII-XIII de la figure 12 ;
- la figure 14 est une vue en perspective des moyens de synchronisation pour synchroniser le verrouillage des deux timons coulissants ;
- la figure 15 est une vue en perspective d'un système d'accrochage et d'un système de couplage selon une première variante du troisième mode de réalisation ;
- la figure 16 est une vue selon le plan de coupe XVI-XVI de la figure 15 ; et,
- la figure 17 est une vue en perspective d'un système d'accrochage et d'un système de couplage selon une deuxième variante de réalisation du troisième mode de réalisation.

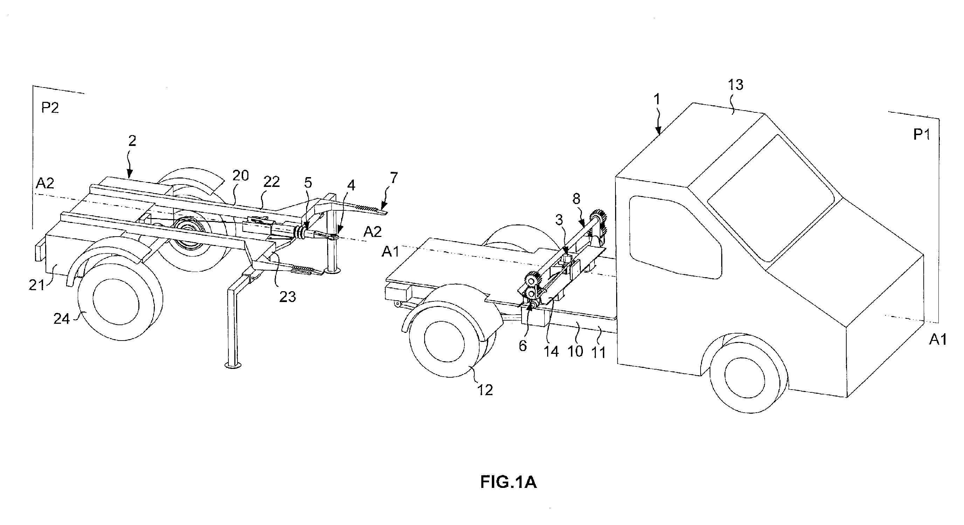

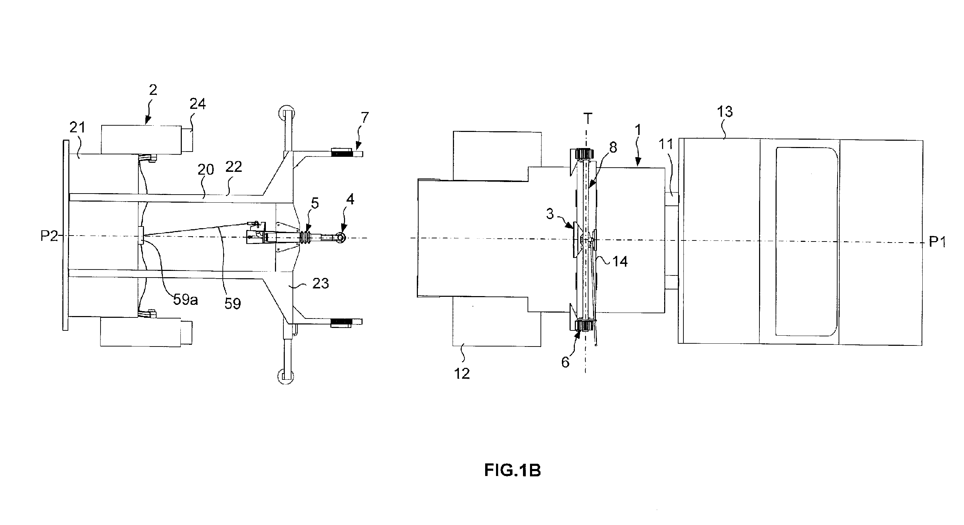

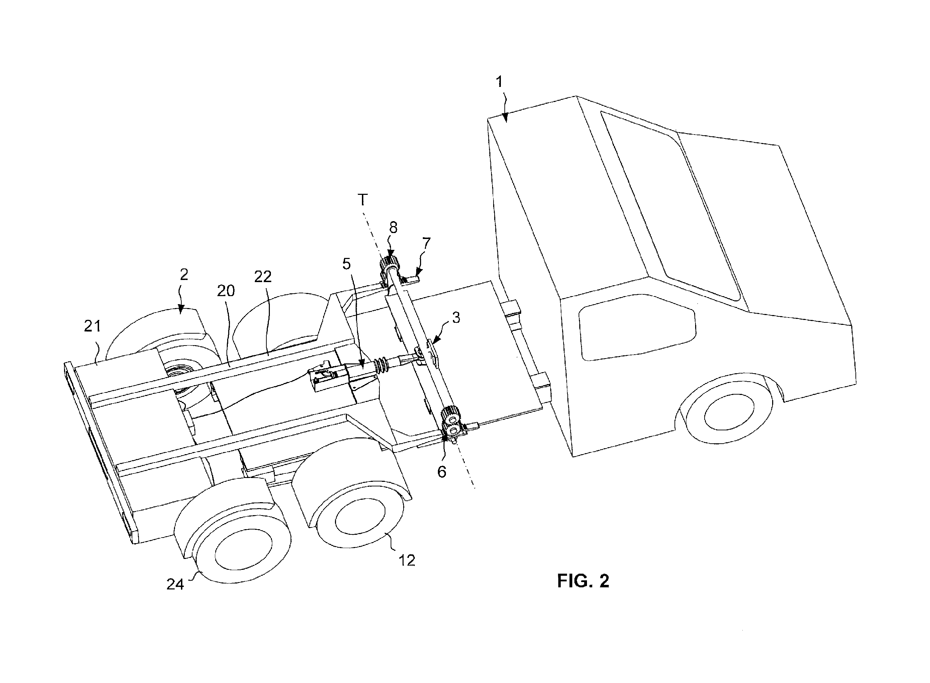

Les figures 1A, 1B et 2 illustrent un ensemble routier selon un premier mode de réalisation de l'invention comprenant un véhicule tracteur 1, une remorque 2, et un système d'attelage qui comporte un dispositif d'accrochage 3 monté sur le véhicule tracteur, apte à coopérer avec un dispositif d'accrochage 4 complémentaire monté sur la remorque pour accrocher la remorque au véhicule tracteur dans une position dite accrochée de la remorque illustrée à la figure 2.

Le véhicule tracteur, de type utilitaire, comprend un châssis 10, sur lequel sont montés un essieu directionnel avant portant des roues avant et un essieu arrière portant des roues arrière 12. Le châssis porte en partie avant une cabine 13 et le système de motorisation du véhicule. Le châssis 10 présente un plan P1 longitudinal vertical médian, dit de symétrie, ainsi qu'un axe longitudinal médian A1 sensiblement horizontal passant par le point d'accrochage du dispositif d'accrochage 3. Il est formé par exemple de deux longerons 11, reliés parallèlement entre eux par plusieurs traverses (non représentées). Le dispositif d'accrochage du véhicule tracteur comprend un organe d'accrochage, monté sur une traverse 14 fixée sur les longerons 11, et formé dans le présent mode de réalisation d'un crochet 3 d'attelage comprenant une broche montée coulissante verticalement dans une chape. Le crochet d'attelage est disposé sensiblement selon le plan P1, au dessus et en amont de l'essieu arrière.

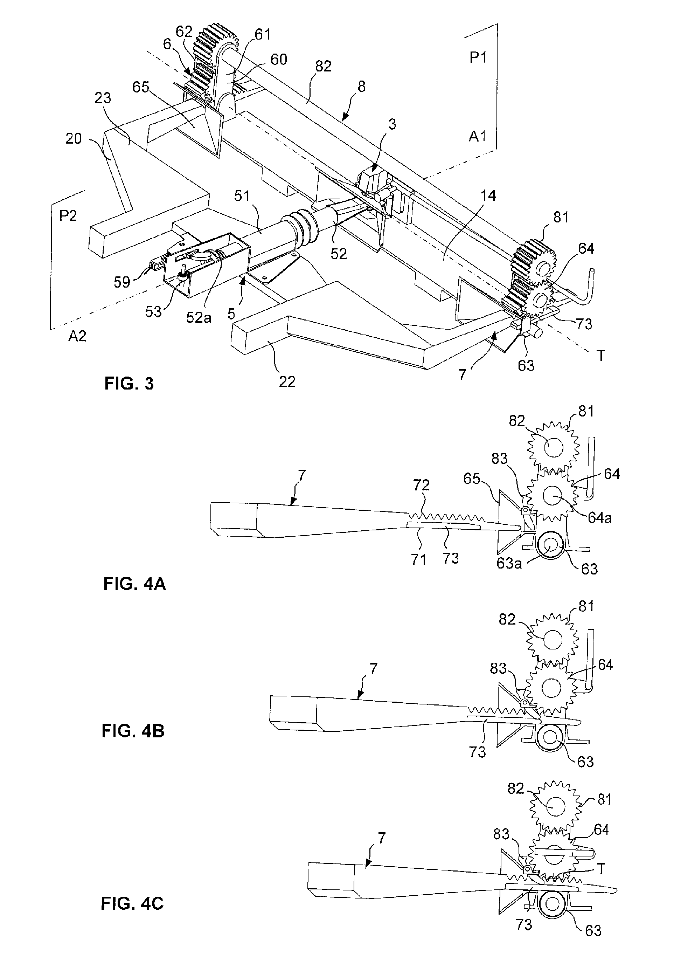

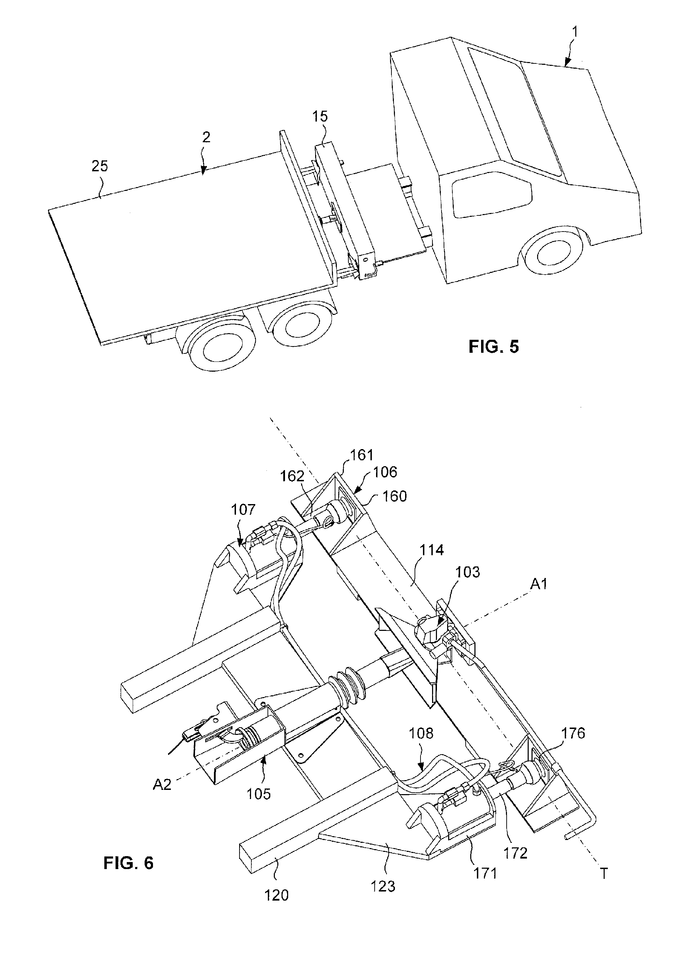

La remorque 2 comprend un châssis 20 comportant une partie support 21 portant les roues 24, et deux longerons 22 latéraux assemblés sur la partie support, symétriquement de part et d'autre du plan P2 longitudinal vertical de symétrie de la remorque qui présente un axe longitudinal médian A2 compris dans le plan vertical médian P2, dit de symétrie, et confondu avec le plan horizontal de symétrie de l'anneau d'accrochage 4. En position accrochée de la remorque, l'axe longitudinal A2 de la remorque passe par l'axe de tangage T qui lui est perpendiculaire. L'axe longitudinal A2 passe également par le centre de la broche du crochet d'attelage 3 et par le centre de l'anneau d'accrochage 4. Ces longerons s'étendent en avant de la partie support et sont reliés entre eux à leur extrémité avant par une traverse avant 23. Le châssis peut être équipé de différents types de carrosserie, par exemple d'une benne basculante ou non basculante, d'une carrosserie de type fourgon ou d'un plateau 25 tel qu'illustré à la figure 5. La remorque comprend un timon d'attelage de type coulissant, dit timon coulissant 5, connu en soi. L'axe du timon coulissant est disposé dans le plan longitudinal vertical de symétrie P2 de la remorque et selon l'axe longitudinal A2. En référence en particulier à la figure 3, le timon coulissant comprend une première partie fixe formée d'un corps 51 fixe tubulaire fixé sur la traverse avant 23, et une partie mobile formée d'une barre 52 mobile tubulaire qui est montée coulissante via des paliers dans le passage interne du corps fixe. L'extrémité avant de la barre mobile, qui s'étend en avant de la traverse, est équipée du dispositif d'accrochage complémentaire formé ici d'un anneau 4 d'accrochage pour l'accrochage de la remorque au crochet 3 du véhicule tracteur. La remorque est équipée d'un dispositif de freinage par inertie, comprenant des moyens de freinage disposés au niveau des roues 24 et commandés par le déplacement de la barre mobile 52 via un système de transmission 59, par exemple de type tringlerie et / ou câbles ou de type hydraulique. La barre mobile présente une portion arrière 52a, s'étendant en arrière du corps fixe, qui coopère avec le système de transmission 59. Le système de transmission comprend palonnier 59a permettant de répartir de façon égale l'effort de freinage sur les deux roues. Cette portion arrière 52a est en outre reliée à un système d'amortissement 53 appelé amortisseur de timon, connu en soi, qui amortit l'effet d'inertie de la remorque et sollicite élastiquement la barre mobile vers sa position déployée maximale.

Le système d'attelage permet dans la position accrochée de la remorque un pivotement de la remorque autour d'un axe de tangage T sensiblement perpendiculaire au plan de symétrie P1 et passant par l'axe de la broche.

L'ensemble routier comprend en outre un système de guidage axial pour maintenir l'axe A2 longitudinal et/ou le plan P2 longitudinal vertical de symétrie de la remorque sensiblement dans le plan P1 longitudinal vertical de symétrie du véhicule tracteur dans la position accrochée de la remorque. Ce système de guidage axial comprend deux premiers dispositifs 6 de liaison montés sur la traverse 14 du véhicule tracteur, symétriquement de part et d'autre du plan P1 et coopérant avec deux seconds dispositifs 7 de liaison montés sur la traverse avant 23 de la remorque de part et d'autre du plan P2, et s'étendant devant ladite traverse, de part et d'autre du timon coulissant 5.

En référence aux figures 3 et 4a, chaque premier dispositif de liaison 6 est formé d'un support 60 monté sur la traverse 14 et comprenant deux flasques 61, 62 entre lesquels sont montés en rotation, autour d'axes transversaux perpendiculaires au plan P2, un galet rotatif inférieur 63 à surface lisse, et un pignon 64 dit intermédiaire disposé au dessus dudit galet. Le galet et le pignon sont par exemple chacun monté fou sur une tige 63a, 64a qui est montée fixe entre les deux flasques, le galet 63a ayant de préférence une capacité à pouvoir s'écarter sensiblement de manière élastique du pignon 64a.

Chaque second dispositif de liaison comprend un bras 7 longitudinal, de type crémaillère, dit bras crémaillère, s'étendant parallèlement à l'axe A2, et dont la portion d'extrémité présente une surface inférieure 71 sensiblement plane et une surface supérieure 72 crantée. Lors de l'accrochage de la remorque, la portion d'extrémité de chaque bras crémaillère s'engage entre le galet 63 et le pignon 64 intermédiaire d'un premier dispositif de liaison, sa surface inférieure 71 plane venant contre le galet 63 et les crans de sa surface supérieure 72 engrenant avec les crans du pignon 64 intermédiaire. Les galets rotatifs 63 permettent de maintenir les bras crémaillère en contact avec les pignons intermédiaires, tout en pouvant s'écarter sensiblement des pignons 64a lors des mouvements de tangage pendant lesquels les bras crémaillère peuvent être légèrement inclinés. Un pavillon 65 de centrage est monté sur chaque support pour faciliter l'introduction des bras crémaillères entre les galets et les pignons intermédiaires.

Le système de guidage axial comprend en outre un dispositif 8 dit de couplage ou de synchronisation comportant un pignon 81 supérieur monté en rotation entre les deux flasques 61, 62 de chaque support, au dessus du pignon intermédiaire, en s'engrenant avec celui-ci, les deux pignon 81 supérieurs sont montés fixes en rotation aux extrémités d'un même arbre de transmission 82 dit de couplage. Cet arbre de couplage qui relie les pignons supérieurs permet de synchroniser la rotation des pignons 64 intermédiaires, et ainsi d'obtenir un déplacement parfaitement symétrique des deux bras crémaillères par interaction, dans le sens longitudinal du véhicule et de la remorque, des dents des pignons avec les dents des crémaillères, et ainsi de garantir le guidage axial de la remorque sans exercer d'action par appui mécanique quelconque dans le sens transversal ni du véhicule ni de la remorque.

Tel qu'illustré à la figure 5, le crochet 3, les premiers dispositifs 6 de liaison et le dispositif de couplage peuvent être recouverts d'un capotage 15 de protection montée sur la traverse.

Des moyens de synchronisation sont en outre prévus pour synchroniser l'engagement des bras crémaillères avec les pignons intermédiaires tels que représentés aux figures 3, 4A, 4B et 4C. Ces moyens de synchronisation comprennent par exemple pour chaque support, un levier 83 monté pivotant sur le support 60 et apte à venir s'enclencher sur le pignon 64 intermédiaire dans une position active pour bloquer celui-ci en rotation. Chaque bras est muni d'un bossage latéral 73 apte à agir sur le levier lors de l'engagement du bras entre un galet 63 et un pignon 64 intermédiaire pour faire pivoter le levier dans une position dite inactive dans laquelle le levier est désengagé du pignon. Les figures 4A à 4C illustrent l'engagement d'un bras crémaillère entre le galet et le pignon intermédiaire d'un support, avec le déblocage du pignon intermédiaire par l'action du bossage 73 sur le levier. Un pignon intermédiaire restera bloqué en rotation par le pignon supérieur de l'arbre de couplage si le levier de l'autre pignon intermédiaire n'a pas été manoeuvré en position inactive par l'extrémité de l'autre bras crémaillère. Le levier est sollicité élastiquement par des moyens élastiques en position active, de sorte que le levier revient automatiquement en position active de blocage lorsque la remorque est décrochée du véhicule. En variante, ce premier mode de réalisation peut être réalisé de façon équivalente en disposant les bras crémaillères sur le véhicule et les pignons liés par leur arbre sur la remorque. Dans ce cas, chacune des extrémités des bras crémaillère sera liée au châssis du véhicule via un palier oscillant dont l'axe sera sensiblement confondu avec l'axe de tangage T de la remorque.

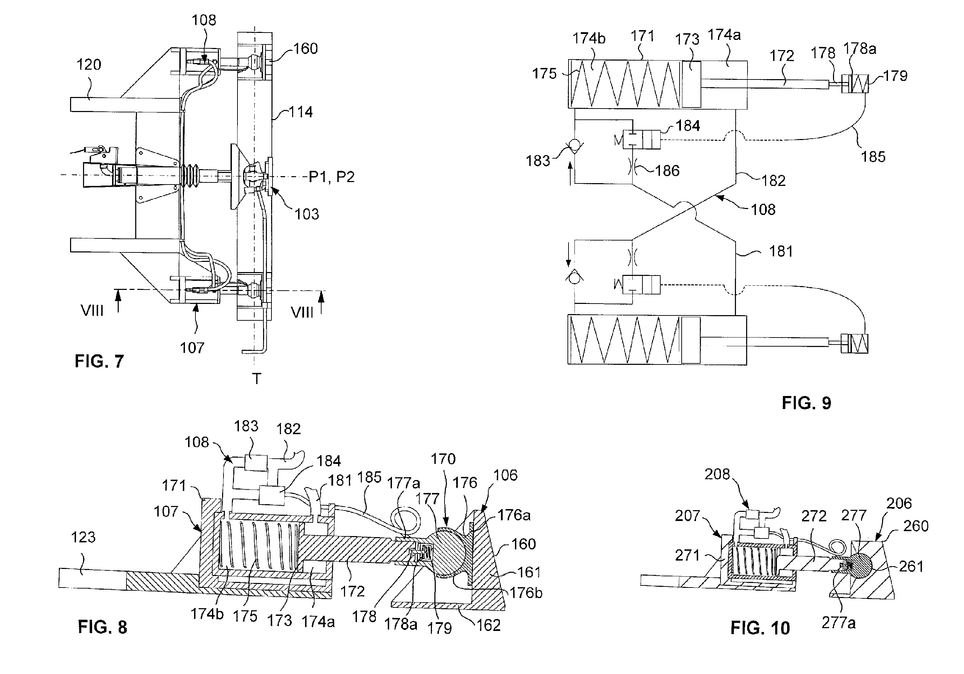

Les figures 6 et 7 illustrent un système d'accrochage et un système de guidage selon un deuxième mode de réalisation. Comme précédemment, le système d'attelage comprend côté véhicule tracteur un organe d'accrochage 103 monté sur une traverse 114, ladite traverse étant fixée au châssis (non représenté) du véhicule tracteur. L'organe d'accrochage 103 est formé d'un crochet d'attelage et est disposé sensiblement selon l'axe A1 du véhicule, au dessus et en avant de l'essieu arrière. Côté remorque, un timon coulissant 105 équipé d'un anneau d'accrochage est monté sur la traverse 123 avant du châssis 120 de la remorque et selon son axe A2.

Le système de guidage axial comprend du côté de la remorque deux seconds dispositifs de liaison montés sur la traverse avant 123 de part et d'autre du plan P2, chaque second dispositif de guidage se présente sous la forme d'un vérin 107, avec un corps 171 monté fixe sur la traverse avant 123 et une tige 172 mobile montée coulissante dans le corps, parallèlement à l'axe A2. En référence à la figure 8, la tige est munie à son extrémité arrière d'un piston 173 définissant dans le cylindre une chambre avant 174a et une chambre arrière 174b. La tige de vérin est sollicitée élastiquement vers une position déployée par un ressort 175 de rappel monté dans la chambre arrière 174b. Une tête de guidage 170 comprenant un patin 176 d'appui est montée à l'extrémité avant de la tige de vérin via une liaison de type rotule. Une rotule 177 est munie d'un tube 177a d'assemblage pour son assemblage sur l'extrémité avant de la tige 172. Le patin 176 comprend une plaque 176a d'appui à surface active plane muni d'un côté d'un bol 176b semi-sphérique par lequel le patin est emboîté sur la rotule.

Côté véhicule, le système de guidage axial comprend deux premiers dispositifs de liaison 106 monté sur la traverse 114 symétriquement de part et d'autre du plan P1, chaque premier dispositif de liaison comprenant un support 160 comprenant une plaque 161 d'appui avec une surface plane sensiblement verticale et perpendiculaire au plan P1 contre laquelle la plaque 176a d'un patin est apte à venir en appui, en liaison appui plan, lorsque la remorque est attelée au véhicule tracteur. Dans ce mode de réalisation, le système de guidage autorise un mouvement de roulis de la remorque par rapport au véhicule tracteur, c'est-à-dire un mouvement de rotation de la remorque autour de son axe longitudinal médian, la surface active plane des patins 176 étant apte à glisser contre la surface plane des plaques 161. Le système de guidage ne perturbe pas le mouvement de tangage de la remorque car le centre de la rotule des patins 176 est placé sur son axe de tangage T. Pour limiter ce mouvement de roulis, chaque support comprend une plaque inférieure 162 disposée sensiblement horizontalement contre laquelle le patin peut venir s'appuyer.

Pour garantir le guidage axial, le dispositif 108 de couplage, de type pneumatique ou hydraulique, de préférence hydraulique, relie les deux vérins de guidage 107 gauche et droit de sorte que les chambres des vérins communiquent entre elles de façon croisée. Le dispositif de couplage comprend une première ligne constituée d'une canalisation rigide ou d'une tuyauterie flexible 181 reliant la chambre avant du vérin droit avec la chambre arrière du vérin gauche, et une deuxième ligne 182 reliant la chambre avant du vérin gauche avec la chambre arrière du vérin droit. Chaque ligne comprend un clapet 183 anti-retour et un distributeur 184 tout ou rien à commande par pression, ledit distributeur et ledit clapet étant montés en parallèle sur la ligne. Le clapet 183 autorise uniquement le passage du fluide en direction des chambres arrière. Le distributeur 184 laisse passer le fluide dans la ligne uniquement si un effort d'appui suffisant est appliqué en extrémité du patin monté sur le vérin dont la chambre arrière est reliée à ladite ligne. Pour ce faire, la tête de guidage, comprenant le patin monté sur une rotule, est montée coulissante par son tube 177a sur l'extrémité de la tige 172 de vérin et est équipée d'un piston 178a de commande pour commander l'ouverture du distributeur. Une tige 178 de commande est fixée à l'extrémité de la tige 172 de vérin et est équipée du piston 178a de commande apte à coulisser dans le tube, en définissant une chambre avant et une chambre arrière. Un ressort 179 de type spirale ou rondelle Belleville est monté dans la chambre avant pour solliciter le patin vers une position déployée. Cette chambre avant est reliée par un flexible 185 au distributeur. Lorsque le patin subit un effort, en particulier lors d'un freinage du véhicule tracteur, la tête de guidage coulisse sur la tige de vérin, son piston de commande coulisse dans le tube et expulse le fluide la chambre avant ce qui actionne le distributeur. En l'absence d'effort appliqué sur les patins, les clapets anti-retour permettent aux vérins de rester en position déployée sous l'effet de leur ressort interne. Une variante de ce mode de réalisation consiste à remplacer le distributeur extérieur par un distributeur intérieur au vérin en utilisant une mobilité partielle du piston du vérin sur sa tige, maintenu sur celle-ci par un jeu de ressorts et entre deux butées, qui permet de détecter la moindre poussée axiale sur la tige en actionnant un distributeur interne de sa chambre arrière qui laisse passer le fluide vers la chambre avant du vérin opposé.

La figure 9 illustre de manière schématique les lignes de communication fluidique entre les deux vérins avec le système de commande intégré aux têtes de guidage pour la commande des distributeurs. Le recul de la tige 172 d'un vérin, et donc le freinage de la remorque, ne sera possible que si les deux distributeurs sont commandés en ouverture par leur piston de commande respectif. Le fluide hydraulique étant incompressible, seul le déplacement croisé et simultané des fluides, des deux jeux de chambres symétriques avant et arrière, permet le déplacement des pistons des vérins. Les sections des vérins étant identiques, les volumes de fluide déplacés sont donc identiques ce qui engendre un déplacement identique des tiges des vérins. Les distributeurs et leur système de commande intégrés aux têtes de guidage 170 constituent des moyens de synchronisation pour synchroniser la mise en appui simultané des deux patins 176 des têtes de guidage contre les supports 160. L'accrochage de la remorque ne peut être effectué que si les deux patins sont en appui contre leur support de guidage.

Comme indiqué précédemment, les dispositifs de liaison autorisent un mouvement de roulis de la remorque autour de son axe longitudinal médian, le système de guidage axial servant dans ce cas à maintenir l'axe longitudinal médian A2 de la remorque sensiblement dans le plan longitudinal vertical P1 du véhicule tracteur.

Chaque ligne 181, 182 peut en outre comprendre un ajutage 186 formant une restriction de section permettant de réaliser la fonction amortissement de timon et ainsi de s'affranchir de l'amortisseur de timon décrit précédemment agissant sur l'extrémité arrière de la barre mobile du timon coulissant.

La figure 10 illustre une variante de réalisation dans laquelle la tête de guidage de chaque second dispositif de liaison comprend uniquement une rotule 277 telle que décrite précédemment, montée via son tube 277a sur la tige 272 du vérin 207, sans patin d'appui. Les premiers dispositifs de liaison du véhicule tracteur comprennent deux supports 206, disposés de part et d'autre du plan de symétrie vertical du véhicule et munis chacun d'un logement 261 de forme globalement semi-sphérique, chaque logement étant apte à recevoir la rotule 277 dont l'axe est placé sur l'axe de tangage T lorsque la remorque est en position accrochée pour permettre le libre mouvement de tangage de celle-ci. Ce type de dispositif de liaison qui supprime la liberté de glissement de la tête de guidage 170 du vérin dans le plan vertical par rapport à son support 160, en combinaison avec le dispositif de couplage précité, permet de réaliser en outre une fonction antiroulis, le système de guidage axial permettant de maintenir le plan longitudinal vertical de la remorque sensiblement dans le plan longitudinal vertical du véhicule tracteur dans la position accrochée de la remorque.

Ce premier deuxième mode de réalisation peut être réalisé de façon équivalente en disposant les corps des vérins sur le véhicule et les supports de guidage sur la remorque. Dans ce cas, chacune des extrémités des corps des vérins opposée à la tige sera liée au châssis du véhicule via un palier oscillant dont l'axe sera sensiblement confondu avec l'axe de tangage de la remorque.

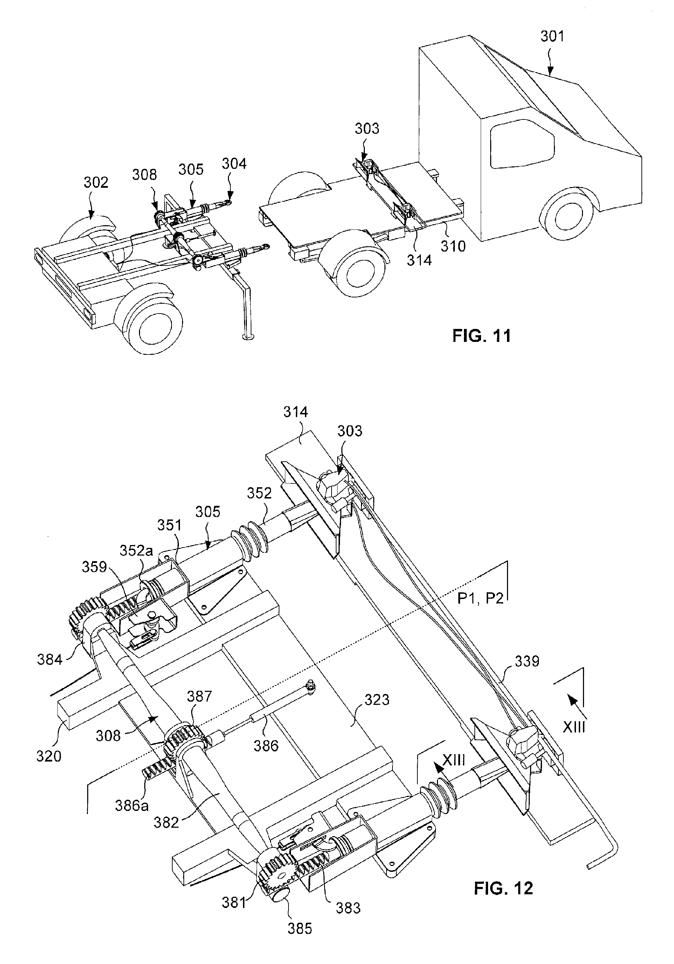

Les figures 11 et 12 illustrent un ensemble routier selon un troisième mode de réalisation dans lequel la remorque 302 comprend deux timons coulissants 305 à freinage par inertie, équipés d'anneaux d'accrochage 304 et disposés symétriquement de part et d'autre du plan P2 longitudinal vertical de la remorque, et côté véhicule, deux crochets 303 d'attelage montés sur le châssis 310 du véhicule, symétriquement et en correspondance de part et d'autre du plan P1 longitudinal vertical du véhicule. Dans ce mode de réalisation, les crochets d'attelage et les timons coulissants équipés des anneaux d'accrochage constituent respectivement les premiers et seconds dispositifs de liaison du système de guidage axial.

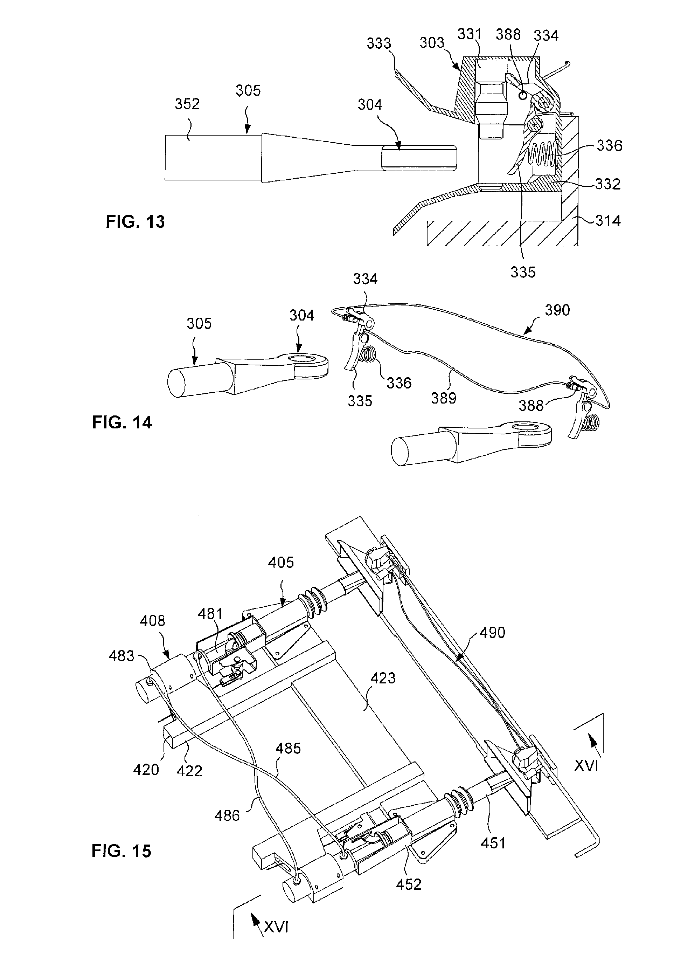

Les deux crochets 303 sont montés sur une traverse 314 qui est fixée sur le châssis 310 du véhicule tracteur, au dessus et en avant de l'essieu arrière. En référence en particulier à la figure 13, chaque crochet 303 comprend, de manière connue en soi, une broche 331 montée sur une chape 332, et est équipé d'un pavillon de centrage 333. La chape 332 comporte un corps de section transversale en forme générale de U, avec une base verticale, par laquelle ladite chape est fixée contre l'aile verticale de la traverse 314 de section transversale en L, et deux branches orientées vers l'arrière. La broche d'axe vertical est montée mobile sensiblement verticalement sur la branche supérieure de la chape et peut être actionnée via un doigt 334 de manoeuvre d'un système de verrouillage/déverrouillage, entre une position haute dite déverrouillée dans laquelle l'extrémité inférieure de la broche est écartée de la branche inférieure, et une position basse dite verrouillée dans laquelle la broche s'insère dans un trou de cette branche inférieure. Le doigt 334 est monté en rotation par une première extrémité sur la branche supérieure, autour d'un axe de rotation perpendiculaire à l'axe de la broche. L'autre extrémité du doigt est engagée dans un trou de la broche ou contre un épaulement ou une encoche de cette dernière, tel qu'illustré à la figure 13. Les doigts 334 des deux crochets d'attelage sont solidaires en rotation d'une même barre de commande 339 (Figures 12 et 15) qui s'étend jusqu'à une extrémité de la traverse 314, avec une extrémité coudée, pour permettre leur manoeuvre par un opérateur depuis un côté du véhicule. La broche est sollicitée élastiquement vers sa position de verrouillage par des moyens élastiques appropriés (non représentés) agissant sur la broche et/ou le doigt. La broche est maintenue en position haute déverrouillée au moyen d'un levier 335 monté rotatif sur la branche supérieure de la chape, autour d'un axe de rotation perpendiculaire à l'axe de la broche. Dans une position de blocage du levier 335, un premier bras du levier 335 vient bloquer le doigt 334 lorsque la broche est en position haute déverrouillée. Un ressort 336 de rappel monté entre la base de la chape et le deuxième bras du levier 335 sollicite élastiquement le levier 335 dans cette position de blocage. Lors de l'accrochage de la remorque, l'anneau 304 d'accrochage vient pousser-le deuxième bras du levier 335 et le fait pivoter vers l'avant du véhicule en comprimant le ressort 336, le premier bras du levier 335 basculant en même temps vers l'arrière ce qui débloque ainsi le levier de déverrouillage 334 de la broche.

Comme précédemment, chaque timon coulissant comprend un corps fixe 351 tubulaire fixé sur la traverse avant 323 du châssis 320 de la remorque, et une barre mobile 352 tubulaire qui est montée coulissante dans le corps fixe, sensiblement parallèlement au plan P2 de la remorque. L'extrémité avant de la barre mobile est équipée de l'anneau 304 d'accrochage. La portion arrière 352a de la barre mobile qui s'étend en arrière du corps fixe coopère avec le système de transmission 359 pour la commande des moyens de freinage de la remorque. Les moyens de freinage de la remorque peuvent être actionnés soit par l'un des timons coulissants, soit par les deux grâce à un palonnier équilibreur.

Le dispositif 308 de couplage est ici de type mécanique et agit sur les portions arrière 352a des barres mobiles pour assurer l'identité de leur déplacement. Les portions arrière sont prolongées par des barres 383 se présentant sous la forme de crémaillères, s'étendant parallèlement au plan P2, avec une surface inférieure sensiblement plane et une surface supérieure crantée. Un arbre de couplage 382 est monté rotatif sur le châssis via des supports 384, perpendiculairement au plan P2, et porte en extrémité des pignons 381, chaque pignon engrenant avec la crémaillère 383 d'une barre mobile d'un timon. Des galets inférieurs 385 sont avantageusement montés rotatifs sur le châssis pour maintenir les crémaillères en contact avec les pignons et éviter la flexion de celles-ci.

Un vérin 386 d'amortissement est monté par son cylindre sur le châssis 320 de la remorque, l'extrémité de sa tige de piston est munie d'une crémaillère 386a qui engrène avec un pignon central 387 de l'arbre de couplage. La crémaillère repose de préférence sur un galet inférieur et est guidé entre deux parois latérales montées sur une traverse intermédiaire du châssis. Ce vérin d'amortissement disposé selon le plan de symétrie P2 de la remorque permet de réaliser de façon équilibrée la fonction amortissement de timon, et ainsi de s'affranchir d'un amortisseur de timon tel que décrit précédemment pour chaque timon coulissant.

Des moyens de synchronisation 390sont en outre prévus pour synchroniser le verrouillage des deux broches des crochets d'attelage uniquement lorsque les deux anneaux 304 sont disposés dans l'axe des broches. En référence en particulier à la figure 14, sur chaque crochet d'attelage, un petit axe cylindrique 388 de blocage est monté coulissant sur la branche supérieure de la chape, perpendiculairement à l'axe de la broche et est sollicité par un ressort dans une position de blocage dans laquelle l'extrémité de cet axe 388 bloque le doigt 334 dans la position haute déverrouillée de la broche. L'axe 388 est relié à une première extrémité d'un câble de commande passant dans une gaine 389, la deuxième extrémité du câble étant fixée au premier bras du levier 335 de l'autre crochet d'attelage. Le déplacement du levier 335 d'un crochet d'attelage lorsqu'un anneau rentre dans sa chape exerce ainsi une traction sur le câble dont l'autre extrémité est liée à l'axe 388 de l'autre crochet d'attelage, ce qui écarte ledit axe 388 du doigt 334 et débloque ainsi la broche de l'autre crochet d'attelage. Le doigt 334 d'un crochet ainsi bloqué par le levier 335 de l'autre crochet rend impossible le déclenchement du verrouillage des crochets tant que les deux anneaux d'accrochage ne sont pas simultanément en position idéale de verrouillage. Un système complémentaire de sécurité peut en outre être prévu pour bloquer les broches en position basse verrouillée.

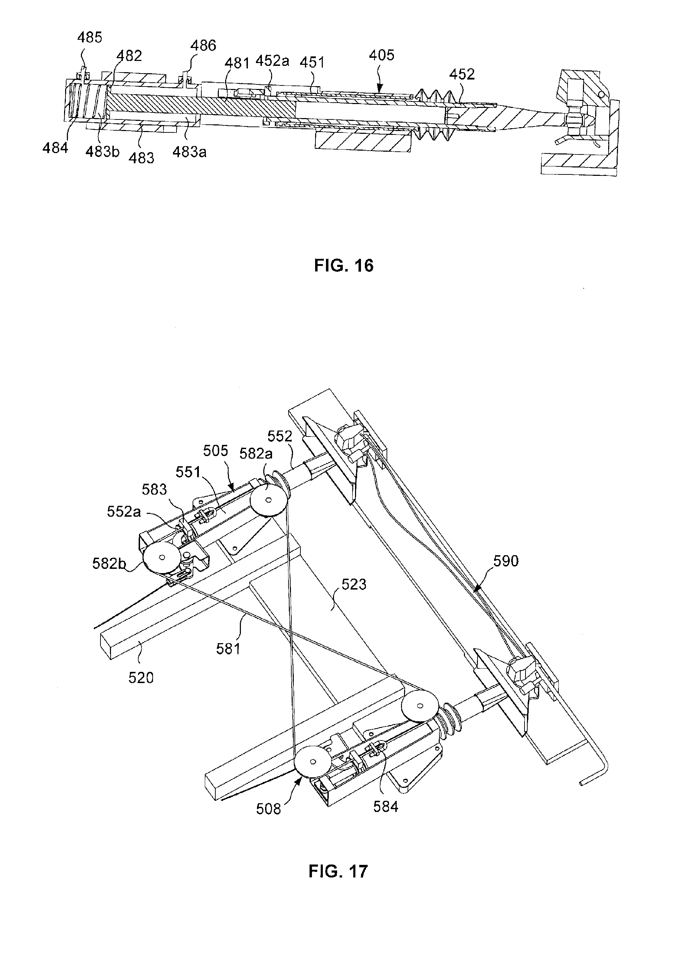

Le système de guidage axial des figures 15 et 16 se différencie de celui des figures 11 et 12 par le fait qu'il comprend un dispositif de couplage de type pneumatique ou hydraulique, de préférence hydraulique, sous la forme de vérins 408, dont les tiges 481 de piston sont fixées aux portions arrière 452a des barres mobiles 452 des deux timons 405 coulissants. Les timons coulissants 405 sont montés par leur corps fixe sur la traverse 423 avant du châssis 420 de la remorque. Les portions arrière 452a sont prolongées par des tiges 481 de piston, s'étendant parallèlement au plan de symétrie et munies en extrémité d'un piston 482. Chaque piston est monté coulissant dans un cylindre 483 monté fixe sur un longeron 422 du châssis en définissant une chambre avant 483a et une chambre arrière 483b. Un ressort 484 est monté dans la chambre arrière de chaque vérin pour solliciter élastiquement les barres mobiles des timons en position déployée. Pour assurer l'identité de déplacement des barres mobiles, les chambres des vérins communiquent entre elles de façon croisée. Une première ligne 485 relie la chambre avant du vérin droit avec la chambre arrière du vérin gauche, et une deuxième ligne 486 reliant la chambre avant du vérin gauche avec la chambre arrière du vérin droit d'une façon identique à celle décrite précédemment. Les deux crochets sont équipés comme précédemment de moyens de synchronisation 490 des verrouillages.

Le système de guidage axial de la figure 17 se différencie du précédent par le fait qu'il comprend un dispositif de couplage 508 de type mécanique, comprenant câbles de liaison et poulies. Les timons coulissants 505 sont montés par leur corps fixe 551 sur la traverse 523 avant du châssis 520 de la remorque. Les portions arrière 552a des barres mobiles 552 des timons sont fixées à un câble 581 de liaison monté en boucle croisée autour de quatre poulies 582a, 582b solidaires du châssis, de manière à assurer l'identité de déplacement des deux barres mobiles des timons. Pour chaque timon, deux poulies 582a, 582b à axe de rotation vertical sont montées rotatives sur le châssis 520, par exemple sur le corps fixe du timon, l'une 582a dite avant étant disposée en avant de la partie fixe 551 du timon, l'autre 582b dite arrière étant disposée à l'arrière de cette partie fixe. Le câble 581 forme une boucle, le câble sortant de la poulie avant du timon gauche s'enroule sur la poulie arrière du timon droit, puis sur la poulie avant du timon droit, puis sur la poulie arrière du timon gauche pour passer ensuite sur la poulie avant du timon gauche. Le câble 581 est formé de préférence de deux parties distinctes de longueur identique disposées symétriquement et telles que chaque extrémité opposée du câble est fixée à l'un des supports 583 montés sur les portions arrière des barres mobiles 552a. Les deux dispositifs tendeurs 384 permettent de régler la tension des câbles de façon adéquate ainsi que les positions longitudinales parfaitement symétriques des deux barres mobiles des timons coulissants. Les deux crochets sont équipés comme précédemment de moyens de synchronisation 590 des verrouillages.

Bien que l'invention ait été décrite en liaison avec différents modes de réalisation de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Ensemble routier comprenant
- un véhicule tracteur (1, 301) comprenant un châssis (10, 310) sur lequel sont montés au moins un essieu avant portant des roues avant et un essieu arrière portant des roues arrière,
- une remorque (2, 302) comprenant un châssis (20, 120, 320, 420, 520) et au moins un timon coulissant (5, 105, 305, 405, 505) à freinage par inertie monté sur le châssis, ledit timon coulissant comportant une partie fixe (51, 351, 451, 551) montée de manière fixe à l'avant du châssis et une partie mobile (52, 352, 452, 552) montée dans la partie fixe de manière coulissante,
- un système d'attelage comprenant au moins un dispositif d'accrochage (3, 103, 303) monté sur le châssis du véhicule tracteur, en avant de l'essieu arrière, apte à coopérer avec un dispositif d'accrochage (4, 304) complémentaire de la remorque monté à l'extrémité libre avant de la partie mobile d'un timon coulissant de la remorque, pour accrocher la remorque au véhicule tracteur dans une position dite accrochée de la remorque, de sorte que la remorque soit articulée sur le véhicule tracteur au moins autour d'un axe transversal de tangage sensiblement horizontal, et,
- un système de guidage axial pour maintenir l'axe longitudinal médian (A2) de la remorque sensiblement dans le plan (P1) longitudinal vertical du véhicule tracteur dans la position accrochée de la remorque,
**caractérisé en ce que** ledit système de guidage axial comprend
- deux premiers dispositifs de liaison (6, 106, 206, 303) montés symétriquement sur le châssis du véhicule tracteur, de part et d'autre de son plan (P1) longitudinal vertical de symétrie, en avant de son essieu arrière, sur l'axe de tangage (T), et deux seconds dispositifs de liaison (7, 107, 207, 304-305), montés symétriquement sur le châssis de la remorque, en partie avant du châssis, de part et d'autre de son plan (P2) longitudinal vertical de symétrie, chaque premier dispositif de liaison étant apte à s'accoupler avec un second dispositif de liaison dans la position accrochée de la remorque, en autorisant un pivotement du second dispositif de liaison autour de l'axe de tangage et un déplacement longitudinal relatif, sensiblement parallèle aux plans (P1, P2) longitudinaux verticaux de la remorque et du véhicule tracteur, du second dispositif de liaison par rapport au premier dispositif de liaison et/ou d'une partie mobile (172, 272, 352, 452, 552) du premier ou du second dispositif de liaison par rapport à une partie fixe (171, 271, 351, 451) dudit premier ou second dispositif de liaison, et
- un dispositif de couplage (8, 108, 208, 308, 408, 508), agissant sur les premiers dispositifs de liaison et/ou les seconds dispositifs de liaison pour assurer l'identité des déplacements longitudinaux relatifs des deux seconds dispositifs de liaison et/ou desdites parties mobiles.

2. Ensemble routier selon la revendication 1, **caractérisé en ce que** des premiers éléments parmi les premiers dispositifs de liaison (106, 206, 303) et les seconds dispositifs de liaison (107, 207, 304-305) comprennent chacun une partie mobile (172, 272, 352, 452, 552) montée coulissante dans une partie fixe (171, 271, 351, 451, 551), les parties mobiles comprenant une extrémité libre coopérant avec les seconds éléments, le dispositif de couplage (108, 308, 408, 508) agissant sur les parties mobiles pour assurer l'identité de leur coulissement par rapport aux parties fixes.

3. Ensemble routier selon la revendication 2, **caractérisé en ce que** les deux seconds dispositifs de liaison (107, 207, 304-305) comprennent chacun une partie mobile (172, 272, 352, 452, 552) montée coulissante, sensiblement parallèlement au plan (P2) longitudinal vertical de symétrie de la remorque, dans une partie fixe (171, 271, 351, 451, 551) solidaire du châssis (20, 120, 320, 420, 520) de la remorque.

4. Ensemble routier selon la revendication 3, **caractérisé en ce que** la remorque (302) comprend deux timons coulissants (305, 405, 505) à freinage par inertie, disposés symétriquement de part et d'autre du plan (P2) longitudinal vertical de la remorque, dont les extrémités libres des parties mobiles (352, 452, 552) sont équipées de dispositifs d'accrochage (304) complémentaires aptes à coopérer avec deux dispositifs d'accrochage (303) montés sur le châssis du véhicule tracteur symétriquement de part et d'autre du plan (P1) longitudinal vertical du véhicule tracteur, lesdits dispositifs d'accrochage constituant lesdits premiers dispositifs de liaison et les deux timons coulissants munis des dispositifs d'accrochage complémentaires constituant les seconds dispositifs de liaison, le dispositif de couplage (308, 408, 508) agissant sur les parties mobiles des timons coulissants (352, 452, 552), sur des portions arrière (352a, 452a, 552a) des parties mobiles des timons coulissants qui s'étendent derrière leurs parties fixes.

5. Ensemble routier selon l'une des revendications 2 à 4, **caractérisé en ce que** chaque partie mobile (172, 272, 352, 452, 552) est solidaire d'un piston (173, 482) qui coulisse dans un cylindre (171, 483), en définissant de part et d'autre du piston une chambre avant (174a, 483a) et une chambre arrière (174b, 483b), le dispositif de couplage (108, 408) de type hydraulique comprenant une connexion fluidique de la chambre avant d'un cylindre avec la chambre arrière de l'autre cylindre.

6. Ensemble routier selon les revendications 4 et 5, **caractérisé en ce que** le dispositif de couplage comprend deux vérins montés fixes par leur cylindre sur le châssis de la remorque et dont les tiges de piston sont fixées aux portions arrière (452a) des parties mobiles (452) des timons (405) coulissants, un dispositif élastique (484) est monté dans la chambre arrière de chaque vérin pour solliciter élastiquement les parties mobiles des timons en position déployée.

7. Ensemble routier selon la revendication 4, **caractérisé en ce que** le dispositif de couplage (308, 508) assure un couplage mécanique des parties mobiles (352, 552) des timons coulissants (305).

8. Ensemble routier selon la revendication 7, **caractérisé en ce que** le dispositif de couplage (308) comprend une barre (383) sous forme de crémaillère fixée à chaque portion arrière (352a) d'une partie mobile (353) d'un timon coulissant, et un arbre (382) de couplage monté rotatif sur le châssis de la remorque, et portant en extrémité des pignons (381) engrenant avec lesdites barres crémaillères (383).

9. Ensemble routier selon la revendication 7, **caractérisé en ce que** le dispositif de couplage comprend au moins un câble (581) de liaison, monté en boucles croisées autour de poulies (582a, 582b) solidaires du châssis de la remorque, et fixé aux portions arrière (552a) des timons coulissants.

10. Ensemble routier selon la revendication 4 ou l'une des revendications 6 à 9, **caractérisé en ce que** les dispositifs d'accrochage du véhicule tracteur sont équipés de moyens de synchronisation (390, 490, 590) aptes à ne permettre que le verrouillage uniquement simultané des deux dispositifs d'accrochage complémentaires de la remorque dans les dispositifs d'accrochage du véhicule.

11. Ensemble routier selon la revendication 5, **caractérisé en ce que** la remorque comprend un seul timon (105) coulissant disposé selon l'axe (A2) longitudinal de la remorque, chaque premier ou second dispositif de guidage comprend un vérin (107), dont le corps (171) est monté fixe sur le châssis du véhicule ou le châssis de la remorque et dont sa tige (172) de piston est munie en extrémité d'une tête de guidage apte à s'accoupler avec un second dispositif de liaison de la remorque ou un premier dispositif (106) de liaison du véhicule tracteur, le dispositif de couplage (108) comprenant deux lignes (181, 182) reliant les chambres (174a, 174b) des vérins de façon croisée, les lignes comprenant des clapets (183) anti-retour et des distributeurs (184) tout ou rien commandé en ouverture lorsqu'un effort est appliqué sur les têtes de guidage.

12. Ensemble routier selon la revendication 1, **caractérisé en ce que** la remorque comprend un seul timon (5) coulissant disposé selon l'axe (A2) longitudinal de la remorque, chaque premier ou second dispositif de guidage comprend un bras (7) longitudinal, sous forme de crémaillère, chaque second ou chaque premier dispositif de liaison comprenant un pignon (64) intermédiaire monté rotatif sur le châssis de la remorque ou du véhicule tracteur, chaque pignon intermédiaire étant apte à s'engrener avec un bras longitudinal dans la position accrochée de la remorque, le dispositif de couplage comprenant un arbre (82) de couplage, monté rotatif sur le châssis de la remorque ou du véhicule, et portant en extrémité des pignons (81) de couplage engrenant avec les pignons intermédiaires.
